# EUROPEAN PATENT SPECIFICATION

(11) **EP 2 684 405 B1**
(45) Date of publication and mention of the grant of the patent: **09.05.2018**
(21) Application number: 11860205.1
(22) Date of filing: 07.03.2011
(51) Int. Cl.: H04W 64/00, H04W 4/02, H04W 24/10

(54) **METHOD AND RADIO NETWORK NODE FOR HANDLING POSITIONING IN A RADIO COMMUNICATION SYSTEM**
VERFAHREN UND FUNKNETZKNOTEN ZUR POSITIONIERUNGSHANDHABUNG IN EINEM FUNKKOMMUNIKATIONSSYSTEM
PROCÉDÉ ET NOEUD DE RÉSEAU RADIO POUR GÉRER LE POSITIONNEMENT DANS UN SYSTÈME DE RADIOCOMMUNICATION

(43) Date of publication of application: 15.01.2014
(73) Proprietor: Telefonaktiebolaget LM Ericsson (publ), 164 83 Stockholm (SE)
(72) Inventor: AMIRIJOO, Mehdi, S-583 36 Linköping (SE); GUNNARSSON, Fredrik, S-587 50 Linköping (SE); ZETTERBERG, Kristina, S-587 52 Linköping (SE); MOE, Johan, S-590 17 Mantorp (SE)
(74) Representative: Brann AB
(86) International application number: PCT/SE2011/050252
(87) International publication number: WO 2012/121632

(56) References cited:
- WO-A2-2008/108194
- US-A1- 2009 143 018
- US-A1- 2010 197 239
- US-A1- 2010 330 921
- US-B1- 7 783 303
- "Study on Minimization of drive-tests in Next Generation Networks; (Release 9); 3GPP TR 36.805", 3RD GENERATION PARTNERSHIP PROJECT (3GPP), 21 December 2009 (2009-12-21), pages 1-24, XP050401520, [retrieved on 2009-12-21]

## Description

### TECHNICAL FIELD

Embodiments herein relate to a radio network node and a method in a radio network node. In particular, embodiments herein relate to handling positioning of a user equipment.

### BACKGROUND

In a typical cellular radio network, also referred to as a wireless communication system, User Equipments, also referred to as UEs in the figures, communicate via a Radio Access Network (RAN) to one or more core networks (CNs).

A user equipment is a mobile terminal by which a subscriber can access services offered by an operator's core network.

The user equipments are radio network nodes and may be mobile stations or user equipment units such as mobile telephones, also known as "cellular" telephones, and laptops with wireless capability, and thus may be, for example, portable, pocket, hand-held, computer-included, or car-mounted mobile devices which communicate voice and/or data with the radio access network.

Each cell in the cellular radio network covers a geographical area. A cell is served by radio base station equipment at a radio base station. That is, the radio base station provides radio coverage in the cell and communicates over an air interface with user equipment units operating on radio frequencies within its range.

A cell from within which the communication between the user equipment and the base station is communicated, is referred to as the "serving cell" for that user equipment.

A radio base station is also a radio network node, in some radio networks called "eNB", "eNodeB", "NodeB" or "B node", and will in this document be referred to as a base station (BS), or a radio network node.

In some versions of the radio access network, several base stations are controlled, e.g. via landlines or radio link, by a Radio Network Controller (RNC) which supervises and coordinates various activities of the plural base stations connected thereto. The radio network controller, which also is a radio network node, is also sometimes termed a Base Station Controller (BSC). The radio network controllers are typically connected to one or more core networks.

In LTE-type radio access networks, referred to as E-UTRAN, there is no separate radio network node corresponding to the BSC or RNC, and the base stations themselves, referred to as eNodeB:s, comprise extra functionality. E-UTRAN comprises radio network nodes referred to as Domain Managers (DM), which manages a number of eNodeB:s. The domain manager may in turn be managed by a so called Network Manager (NM).

Due to the size and complexity of many radio communication systems, operators spend considerable effort in planning, configuring, optimizing, and maintaining their wireless access networks. These efforts can consume a great part of their operational expenditures (OPEX).

Today, operators resort to planning tools to dimension and plan their networks according to a specific business strategy. The approach based on planning tools and prediction is, however, not fully accurate. Reasons for the inaccuracies are imperfections in the used geographic data, simplifications and approximations in the applied propagation models, and changes in the environment, e.g. construction or demolition or seasonal effects such as foliage changes. Furthermore, changes in the traffic distribution and user profiles can lead to inaccurate prediction results. The above mentioned shortcomings force operators to continuously optimize their networks using measurements and statistics, and to perform drive or walk tests.

Drive or walk testing provides a picture of an end user's, such as a user equipment's, perception in the field, and enables the operator to identify locations causing poor performance and their corresponding cause, e.g. incorrect tilt or handover settings. Drive or walk tests are, however, not ideal since only a limited part of the network can be analyzed due to access restrictions and the cost and time involved. Further, only a snapshot in time of the conditions in the field is captured.

A viable method for overcoming these difficulties is to use the user equipments to report the observed service quality in so called measurement reports, along with the locations where the measurements are taken. These user equipment reports may for example be used by a function which continuously monitors the network and estimates the spatial network performance, e.g. coverage and throughput. In order to enable

reporting of the location of where the radio measurements have been performed, the user equipment must be positioned, i.e. localized.

One such prior art approach is disclosed in US 2010/0330921, which describes a method of transmitting a measurement log from a terminal to a network. The measurement log may include location information measured and stored by the terminal.

Another prior art approach is disclosed in "Study of Minimization of drive-tests in Next Generation Networks; (Release 9); 3GPP TR 36.805", 3GPP, 21 December 2009 (2009-12-21), XP050401520. This study discusses automation of the collecting of UE measurements to minimize the need of manual drive-tests. The association between a measurement made by a UE and a position of the UE where the measurement was taken is reported to the network.

For LTE, three different localization methods are foreseen. The first location function is the network-assisted version of Global Navigation Satellite Systems (GNSSs) like the Global Positioning System (GPS) or Galileo. Different GNSSs can be used individually or in combination with other GNSSs. The network assists the user equipment GNSS receiver by providing assistance data, e.g., visible satellite list, clock corrections and reference positions. This is done to reduce the user equipment GNSS start-up and acquisition times, to increase the user equipment GNSS sensitivity, and to allow the user equipment to consume less handset power than with stand-alone GNSS. The network-assisted GNSS methods rely on signaling between user equipment GNSS receivers and a continuously operating GNSS reference receiver network which has clear sky visibility of the same GNSS constellation as the assisted user equipment. With GNSS the highest accuracy may be achieved.

The second localization method is the Observed Time Difference Of Arrival (OTDOA) method. This method utilizes the differences of time measurements of downlink radio signals from at least three eNodeBs along with the knowledge of the geographical coordinates of the measured eNodeBs and their relative downlink timing for calculating the user equipement's position.

The last localization method, the enhanced cell ID positioning method, uses information about the serving cell and the knowledge of the geographical coordinates of the serving eNodeB for estimating the user equipment position. Additional radio resource measurements like the Reference Signal Received Power (RSRP) or the Reference Signal Received Quality (RSRQ) can be used to improve the user equipment location estimate.

Hybrid positioning using multiple methods from the above mentioned positioning methods may also be supported.

In many radio communication networks, positioning of user equipements is handled by a positioning server which collects position measurements, for example time measurements used in OTDOA, associated with the user equipment to be positioned, and calculates a position estimate based on the position measurements. The positioning server may be referred to for example as a E-SMLC or a SMLC, and may be a physical node or a logical node in a radio network node.

One problem with the above mentioned solution is that positioning of the user equipment needs to be active for a substantial time. This drains the battery of the user equipment, especially when GNSS types of positioning methods are used. It also requires resources in the form of signaling to and from the positioning server.

### SUMMARY

In view of the discussion above, it is an object for embodiments herein to provide an improved way of positioning in a radio communication system.

According to a first aspect, the object is achieved by a method in a first radio network node for handling positioning of a first user equipment. The first radio network node and the first user equipment are comprised in a radio communication system. The first radio network node defines a criterion relating to at least one measurable radio quality of the first user equipment. The criterion is based on historical measurements of the at least one radio quality of at least one second user equipment having experienced a radio event. Fulfilment of the criterion is an indication that the radio event is upcoming for the first user equipment. The first radio network node receives a current measurement of the at least one radio quality of the first user equipment for which the radio event is currently upcoming. When the criterion is fulfilled, the first radio network node triggers positioning of the first user equipment for which the radio event is currently upcoming.

According to a second aspect, the object is achieved by a first radio network node for handling positioning of a first user equipment. The first radio network node and the first user equipment are comprised in a radio communication system. The first radio network node comprises a defining unit configured to define a criterion relating to at least one measurable radio quality of the first user equipment. The criterion is based on historical measurements of the at least one radio quality of at least one second user equipment having experienced a radio event. Fulfilment of the criterion is an indication that the radio event is upcoming for the first user equipment. The first radio network node further comprises a receiver configured to receive a current measurement of the at least one radio quality of the first user equipment for which the radio event is currently upcoming. The first radio network node further comprises a triggering unit configured to trigger, when the criterion is fulfilled, positioning of the first user equipment for which the radio event is currently upcoming.

According to embodiments herein, positioning of a user equipment is triggered when a radio event is upcoming for the user equipment. This may be useful for obtaining a position associated with user equipments experiencing a radio event.

Thanks to embodiments herein, the position of the user equipment is available when the radio event occurs, and the position may hence be for example reported with radio measurements triggered by the radio event itself.

### BRIEF DESCRIPTION OF THE DRAWINGS

- Figure 1: is a schematic block diagram illustrating an embodiment of a radio communication system.
- Figure 2: is a combined signalling scheme and flowchart illustrating embodiments in a radio communication system.
- Figure 3: is a flowchart depicting embodiments of a method in a first radio network node.
- Figure 4: is a schematic block diagram illustrating embodiments of a first radio network node.

### DETAILED DESCRIPTION

As part of the development of the embodiments herein, a problem will first be identified and discussed:
Positioning methods as those previously described in the background may take some time to perform. This may result in a positioning result or estimate not being available for a user equipment when other radio measurements associated with the user equipment are reported in relation to a radio event such as a radio link failure, a terminated connection due to e.g. a coverage hole, low throughput, or Reference Symbol Received Power (RSRP) less than a certain threshold, which is bad for the operator and which therefore is interesting for network management purposes.

Solving this problem by having the positioning constantly activated may not be feasible, or even possible, due to for example battery drainage, or extensive signaling to and from a positioning server.

Embodiments herein present a method for activating positioning, such as e.g. GNNS and network based positioning, to enable position information of a user equipment to be available when the user equipment experiences a radio event, by identifying user equipments that are about to experience the radio event and trigger positioning in due time for the position estimate to be computed before the radio event occurs.

Embodiments herein use historical measurements reported from other user equipments that have experienced the radio event in the past to identify measurements which are indicative of a radio event being upcoming. This is used for defining criteria to evaluate if current measurements of a user equipment indicate that a radio event is upcoming for that user equipment. Hence, embodiments herein enable triggering of positioning of a user equipment, for example the GNSS receiver of the user equipment, before the user equipment experiences a radio event.

A radio event may be related to a geographical area of interest, which is a problem area that the operator may want to identify and receive measurements from.

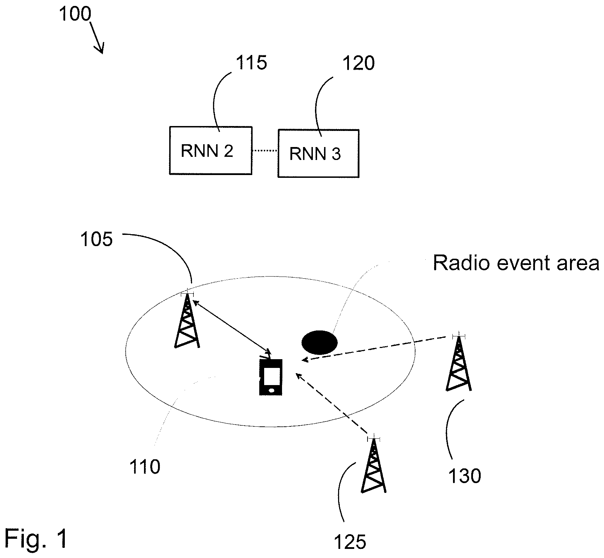

Such an area of interest is in this document referred to as a "radio event area", which is illustrated in figure 1.

Embodiments herein may be exemplified in the following non-limiting description of embodiments.

**Figure 1** depicts **a radio communication system 100** in which embodiments herein may be implemented. The radio communication system 100 may be a WCDMA communication system, a GSM communication system, a PDC communication system, a IS95 communication system, a CDMA2000 communication system, a D-AMPS communication system, or any evolved communication system from any aforementioned systems, or another radio communication system.

The radio communication system 100 comprises radio network nodes, whereof one is **a first base station 105,** which in this example is an e-NodeB. The first base station 105 may in other embodiments be a radio base station such as a Home Node B, a Home eNode B, a GSM/EDGE radio base station or any other network unit capable of serving a user equipment or a machine type communication device in the radio communication system 100. The first base station 105 provides radio coverage over an area which may be referred to as a "cell". In some embodiments, the base station 105 covers more than one cell.

In the example depicted in figure 1, **a first user equipment 110** is positioned in the cell covered by the first base station 105. The user equipment 110 is also a radio network node. The base station 105 is the serving base station for the first user equipment 110. The user equipments referred to in the following are radio network nodes, and may be mobile stations or user equipment units such as mobile telephones, also known as "cellular" telephones, and laptops with wireless capability, and thus may be, for example, portable, pocket, hand-held, computer-included, or car-mounted mobile devices which communicate voice and/or data with the radio access network.

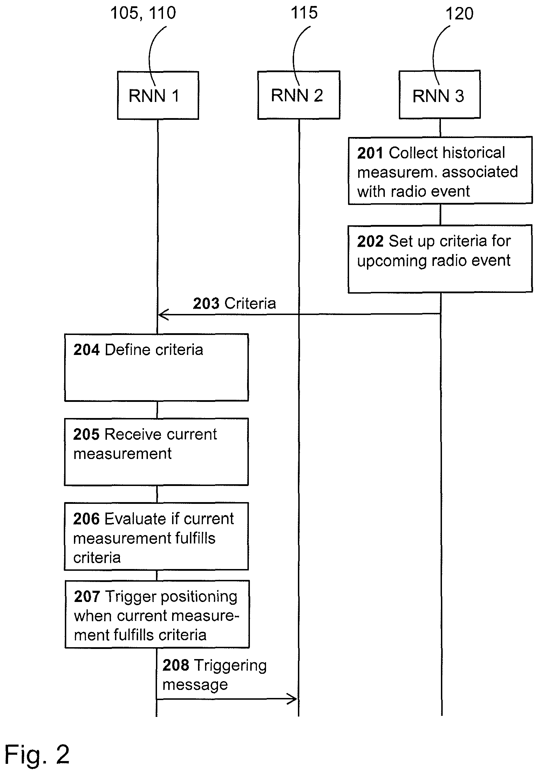

When using general terms and when the first base station 105 and the first user equipment 110 use the same function below, the first base station 105 and the first user equipment 110 are referred to as the **first radio network node** 105, 110, and as RNN1 below in figure 2. This is since embodiments herein may be implemented in the first radio network node being the first base station 105 or the first user equipment 110.

The radio communication system 100 further comprises **a second Radio Network Node RNN2 115,** which may handle network based positioning of the user equipment 110. The second radio network node 115 may be represented by a positioning server, and comprise functionality for calculating a position estimate of the position of the first user equipment 110 by using positioning methods based on for example OTDOA or GNSS as previously described. The position estimate is calculated from position measurements received by the second radio network node 115 from another radio network node such as the user equipment 110 and/or the base station 105. The second radio network node 115 may be a logical or physical radio network node. Depending on the radio communication system 100 in question, a positioning server may be referred to as for example a Serving Mobile Location Center (SMLC), or an Evolved Serving Mobile Location Center (E-SMLC).

The radio communication system 100 further comprises other radio network nodes which may be involved in positioning of the user equipment 110 according to embodiments herein, whereof one is a **third radio network node RNN3 120.** The third radio network node 120 may be a Domain Manager (DM), also referred to as the Operation and Support System (OSS), which manages the eNodeB:s in a LTE-type radio communication system. The third radio network node 120 may also be a Network Manager (NM), which is a radio network node that manages the domain managers in an LTE-system. In some embodiments, the third radio network node may be another suitable radio network node.

In the radio communication system 100, measurements associated with user equipments are regularly preformed. The measurements are measurements of measureable radio qualities of user equipments. Below is a list of such measurable radio qualities.

In the radio communication system 100, certain types of measurements are performed internally in the base stations. Such base station measurements are for example:
**User equipment throughput:** number of bits transmitted/received divided by a time interval.
**Uplink received resource block power:** Total received power, including noise, measured over one resource block at the base station.
**Uplink Signal to Interference Ratio (SIR) (per user equipment):** Ratio of the received power of the reference signal transmitted by the user equipment to the total interference received by the base station over the bandwidth occupied by the user equipment.

Other radio measurements associated with a user equipment are performed by the user equipment itself, and reported to the serving base station. Some of these measurements may be performed on signals which are broadcast from other surrounding base stations than the serving base station. Such base stations are illustrated in figure 1 by **a second base station 125** and **a third base station 130.** The following measurements may be performed by a user equipment:
**Reference Symbol Received Power (RSRP):** RSRP is determined for a considered cell as the linear average over the power contributions (in [W]) of the resource elements that carry cell-specific reference signals within the considered measurement frequency bandwidth.
**E-UTRA carrier Received Signal Strength Indicator (RSSI):** This radio quality is the total received wideband power observed by the user equipment from all sources, including co-channel serving and non-serving cells, adjacent channel interference, thermal noise etc.
**Reference Symbol Received Quality (RSRQ):** RSRQ is defined as the ratio N×RSRP/(E-UTRA carrier RSSI), where N is the number of resource blocks of the E-UTRA carrier RSSI measurement bandwidth. The measurements in the numerator and denominator shall be made over the same set of resource blocks.
**Rank indication:** providing information about the channel rank, number of layers or streams that can be used for downlink transmission.
**Channel-quality indication (CQI):** representing the recommended modulation scheme and coding rate that should be used for downlink transmissions.

By "downlink" above, is understood that the transmission in question goes from a base station to a user equipment.

By "uplink" above, is understood that the transmission in question goes from a user equipment to a base station.

In the text that follows, both measurements which are referred to as "historical measurements" of user equipments and measurements referred to as "current measurements" of radio qualities of the first user equipment 110 may be one or more of the radio qualities listed above.

In the example in figure 1, the user equipment 110 is approaching the radio event area, and is hence about to experience a radio event, such as a failure or poor quality.

According to embodiments herein, by using historical measurements of one or more of the above described radio qualities that have been reported by other user equipments that have experienced the radio event in the past, one or more criteria may be defined to evaluate if current measurements of the first user equipment 110 indicate that the radio event is upcoming for the first user equipment 110. Thanks to this, according to embodiments herein, positioning of the user equipment 110 may be triggered before the radio event occurs.

This enables position information to be reported with other radio measurements when the radio event occurs. Hence, thanks to embodiments herein localised reports of such radio event measurements may be provided and used for example for network management purposes.

How this is done will be explained in the following.

**Figure 2** is a combined flowchart and signalling scheme, illustrating handling of positioning of the first user equipment 110 in the radio communication system 100 according to embodiments herein. It should be noted that the actions which will be referred to may in another embodiment be taken in another suitable order.

In **action 201**, the third radio network node RNN3, collects data in the form of historical radio measurement reports from user equipments and their serving base stations. The measured radio qualities that are comprised in the reports may be for example one or more of the previously described radio qualities. The historical measurements are associated with user equipments that have experienced a radio event.

These historical measurements may, as described above, be used to identify indicators in current measurements that a radio event is upcoming.
Such indicators may be defined by analysing historical measurements derived by a continuous collection of historical measurements of radio qualities of user equipments. Historical measurements that are relevant to a gegraphical area of interest and/or to a radio event may be marked and mapped to interesting radio events in a data base. Examples of relevant measurements are the above mentioned RSRP, RSRQ , timing advance, angle of arrival, CQI, rank indication, etc. Radio event indicators such as for example dropped calls etc that may be reported, may also be mapped to interesting radio events in the data base.

In **action 202,** the third radio network node sets up one or more criteria for identifying that a radio event is upcoming for the first user equipment 110, based on identified indicators for upcoming events in the historical measurements. The criteria relate to one or more measurable radio quality, such as the measurements performed by base stations or user equipments described above. The criteria provides a way to identify that a radio event is upcoming by evaluating a condition defined over a current measurement of the one or more radio qualities for the first user equipment 110, or a sequence of such measurements, received from the first user equipment 110 and/or from the first base station 105.

Setting up the criteria may be for example determining threshold values such that if a current measurement of the radio quality in question exceeds, or falls below, a certain threshold value, this is an indicator that a radio event is upcoming. For example, if a current measurement of RSRP of the first user equipment 110 is below a certain threshold, this indicates that a radio event is upcoming for the first user equipment 110.

Setting up the criteria may comprise determining criteria corresponding to a radio event area in a multi-dimensional space, where the dimensions may be for example measurements associated with the first user equipment 110 and several base stations in the vicinity of the first user equipment 110, such as the first base station 105, the second base station 125, and the third base station 130 in figure 1, and/or with several radio qualities of the first user equipment 110.

In this example, the third radio network node 120 which sets up the criteria based on historical measurements is a domain manager that manages the serving base station 105 for the user equipment 110. In another embodiment the third radio network node 120 may be a network manager.

In **action 203,** the criteria is signalled from the third radio network node 120 to the **first radio network node RNN1 105, 110,** which, as mentioned before, may be the first user equipment 110, or the first base station 105.

In **action 204,** the first radio network node 105, 110 defines the criteria. In this example, where the criteria is obtained from another radio network node, the third radio network node 120, "defining" is performed by obtaining the criteria from the other radio network node which has set up the criteria in action 202. In another embodiment, "defining" is performed by actually setting up the criteria based on historical measurements as described in action 202, since this may in some embodiments be done in the first radio network node 105, 110.

In **action 205,** the first radio network node 105, 110 obtains a current measurement of at least one radio quality for which the criteria is defined. The current measurement is associated with the first user equipment 110 which is approaching the radio event area in figure 1.

In **action 206,** the first radio network node 105, 110 compares the current measurement to the criteria to evaluate if the criteria are fulfilled by the current measurement. When the criteria are fulfilled for the current measurement, this is an indication that a radio event is upcoming for the first user equipment 110.

Hence, in **action 207**, the first radio network node RNN1 105, 110 triggers positioning of the user equipment 110 when the criteria are fulfilled, so that a position estimate may already be provided when the radio event occurs.

In **action 208, a** triggering message is sent to the second radio network node 115. This second radio network node 115 may be needed for the positioning of the first user equipment 110. In this example, the second radio network node 115 is a positioning server in the form of an E-SMLC that calculates a position estimate for the user equipment 110, by using for example one or more of the previously described positioning methods. In doing this, the second radio network node may need position information from other radio network nodes, such as the first radio network node 105, 110.

In the above described example, the criteria is first set up in the third radio network node 120, and then signalled to the first radio network node 105, 110, which as mentioned above may be the first user equipment 110 or the first base station 105. In some embodiments, the third radio network node 120 may be the first base station 105. In such embodiments, the first base station 105 may signal the criteria to the first user equipment 110, and the first user equipment 110 may perform the necessary current measurements, evaluate when the criteria is fulfilled, and trigger positioning when this is the case.

In some embodiments, all or some of the actions performed by the first radio network node 105, 110 and the third radio network node 120 in figure 2 are performed by a network manager, a domain manager, the first user equipment 110, the first base station 105, or by another suitable radio network node.

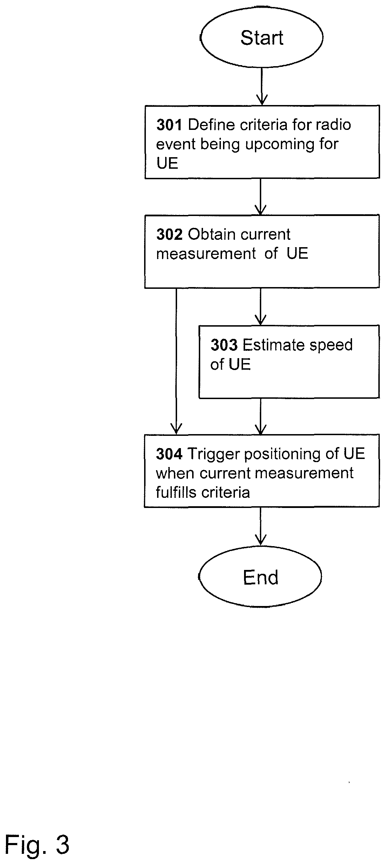

Embodiments herein, relating to a method in the first radio network node 105, 110, 120 for handling positioning of the first user equipment 110, will now be described with reference to the flowchart depicted in **figure 3**. As previously mentioned, the first radio network node 105, 110, 120 and the first user equipment 110 are comprised in the radio communication system 100. The first radio network node 105, 110, 120 may be the user equipment 110, the base station 105 or another suitable radio network node such as a domain manager or a network manager. The method comprises the following actions, which actions may be taken in any suitable order:

### Action 301

The first radio network node 105, 110, 120 defines a criterion relating to at least one measurable radio quality of the first user equipment 110. The criterion is based on historical measurements of the at least one radio quality of at least one second user equipment having experienced a radio event. Fulfilment of the criterion is an indication that the radio event is upcoming for the first user equipment 110.

More than one criterion may be set up.

By "measurable radio quality of the first user equipment" is understood a radio quality associated with, or perceived by, the first user equipment 110, which radio quality may be measured by the first user equipment itself or by another radio network node such as a base station. The measurable radio quality may be one or more of the previously described radio qualities, such as for example RSRP or RSSI.

Fulfilment of the criterion may require that the current measurement of a radio quality exceeds a threshold, or that the current measurement of a radio quality falls below a threshold, depending on the radio quality in question. The threshold may be the sum of an offset value and a threshold used for triggering reporting of radio measurements associated with the first user equipment 110.

The criterion may further be based on knowledge of the positioning method in question, and the time it requires to produce a position estimate after triggering of positioning. This may be useful for triggering positioning in due time to produce a position estimate before the radio event occurs.

The criterion may in some embodiments relate to one or more time sequences of one or more radio qualities. This may provide a more robust criterion. It may further enable estimation of the speed at which the user equipment is moving and/or prediction of how soon the upcoming radio event will occur. Triggering may then in some embodiments be performed earlier if the time sequence is repeated in a short period of time.

The criterion may in some embodiments be obtained from a data base comprising the historical measurements. The data base may be comprised in the first radio network node 105, 110 itself, or in another radio network node.

### Action 302

The first radio network node 105, 110, 120 receives a current measurement of the at least one radio quality of the first user equipment 110, for which first user equipment 110 the radio event is currently upcoming. By "receiving" is here understood that the first radio network node either performs the measurements, or receives the measurements from another radio network node.

### Action 303

This is an optional action according to which the first radio network node 105, 110, 120 estimates the speed at which the radio event is upcoming for the first user equipment 110. The speed may be estimated based on the rate of change of the current measurements of at least one radio quality.

The speed estimate may be used to configure the triggering of positioning described below.

### Action 304

The first radio network node 105, 110, 120 triggers, when the criterion is fulfilled, positioning of the first user equipment 110 for which the radio event is currently upcoming.

It is to be understood that this action 304 comprises evaluating that the criterion is fulfilled, and performing the triggering when this is the case.

Fulfilment of the criterion may require that one or more thresholds are exceeded, by current measurements. Fulfilment of the criterion may require that the thresholds are exceeded for a certain amount of time. Fulfilment of the criterion may require that current measurements of radio qualities fall below thresholds. This too may be required to be fulfilled for a certain amount of time.

There may be more than one threshold for one or more radio qualities. The threshold and the amount of time mentioned above may be set such that unnecessary triggering is avoided and position information is available when the radio event occurs. The threshold and amount of time may be based on the historical measurements and an analysis of on which rate such measurements lead to the radio event.

Evaluating if the criterion is fulfilled may comprise thresholding with hysteresis to avoid toggling. The hysteresis may be set based on historical measurements and /or variance of measurements.

In embodiments wherein the action 303 is performed, the triggering may be adjusted according to the speed.

Triggering may in some embodiments comprise sending a triggering message to at least one second radio network node 105, 110, 115. The triggering message triggers positioning of the first user equipment 110 in the second radio network node 105, 110, 115. The second radio network node may be a positioning server, such as a E-SMLC or a SMLC. The second radio network node may also be the first base station 105, the first user equipment 110, or another radio network node useful in positioning of the user equipment 110.

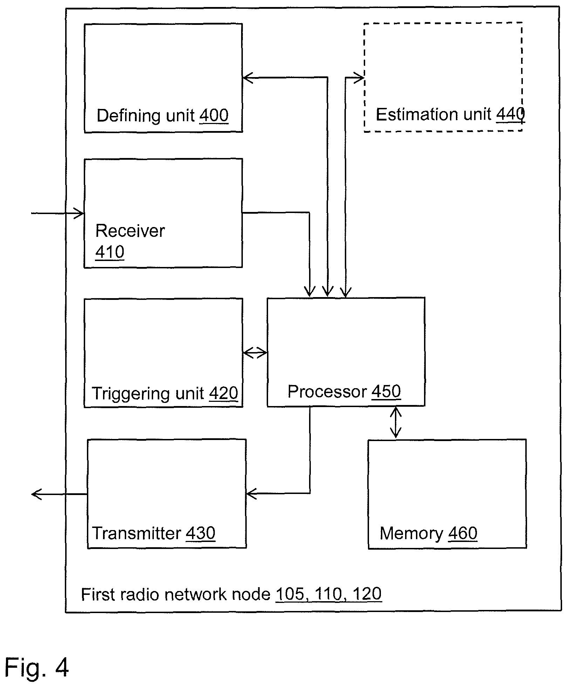

To perform the actions above for handling positioning of the first user equipment 110, the first radio network node 105, 110, 120 comprises an arrangement schematically depicted in **figure 4**. As mentioned above, the first radio network node 105, 110, 120 is comprised in a radio communication system 100. The first radio network node may be a network manager, a domain manager, the first base station 105, the first user equipment 110, or another suitable radio network node. The term "configured to" used herein may also be referred to as "arranged to".

The first radio network node 105, 110, 120 comprises **a defining unit 400** configured to define a criterion relating to at least one measurable radio quality of the first user equipment 110. The criterion is based on historical measurements of the at least one radio quality of at least one second user equipment having experienced a radio event. Fulfilment of the criterion is an indication that the radio event is upcoming for the first user equipment 110.

In some embodiments, the defining unit 400 is further configured to define a criterion which relates to one or more time sequences of one or more radio qualities.

The first radio network node 105, 110, 120 further comprises **a receiver 410** configured to receive a current measurement of the at least one radio quality of the first user equipment 110 for which first user equipment 110 the radio event is currently upcoming.

In some embodiments, the receiver 410 is further configured to receive the criterion from a third radio network node 105, 110, 120. The third radio network node may be a network manager, a domain manager, the first user equipment 110, the first base station 105, or another suitable radio network node.

The first radio network node further comprises **a triggering unit 420** configured to, when the criterion is fulfilled, trigger positioning of the first user equipment 110 for which the radio event is currently upcoming. In some embodiments, the triggering unit 420 is further configured to adjust the triggering according to the speed of the first user equipment 110.

In some embodiments, the first radio network node 105, 110, 120 further comprises **a transmitter 430** configured to signal a triggering message to at least one second radio network node 105, 110, 115. The triggering message triggers positioning of the first user equipment 110 in the second radio network node 105, 110, 115.

In some embodiments, the first radio network node 105, 110, 120 further comprises **an estimation unit 440,** configured to estimate the speed at which the radio event is upcoming for the first user equipment 110.

The embodiments of the first radio network node 105, 110, 120 for handling positioning of the user equipment 110 may be implemented through one or more processors, such as **a processor 450** in the first radio network node 105, 110, 120 depicted in figure 4, together with computer program code for performing the actions of embodiments herein.

The program code mentioned above may also be provided as a computer program product, for instance in the form of a data carrier carrying computer program code for performing the embodiments herein when being loaded into the first radio network node 105, 110, 120.

One such carrier may be in the form of a CD ROM disc. It is however feasible with other data carriers such as a memory stick. The computer program code may furthermore be provided as pure program code on a server and downloaded to the first radio network node 105, 110, 120 e.g. remotely.

The first radio network node 105, 110, 120 may further comprise **a memory 460** comprising one or more memory units. The memory 460 is arranged to be used to store data such as for example the criterion, the current measurements and/or historical measurements. It may further be arranged to store applications to perform the actions of the embodiments herein when being executed in the first radio network node 105, 110, 120.

The embodiments are not limited to the above-described embodiments. Various alternatives, modifications and equivalents may be used.

When using the word "comprise" or "comprising" it shall be interpreted as non-limiting, i.e. meaning "consist at least of".

The embodiments herein are not limited to the above described embodiments. Various alternatives, modifications and equivalents may be used. Therefore, the above embodiments should not be taken as limiting the scope of the invention, which is defined by the appending claims.

## Claims

1. A method in a first radio network node (105, 110, 120) for handling positioning of a first user equipment (110), which first radio network node (105, 110, 120) and which first user equipment (110) are comprised in a radio communication system (100), the method comprising:
*defining (204, 301)* a criterion relating to at least one measurable radio quality of the first user equipment (110), which criterion is based on historical measurements of the at least one radio quality of at least one second user equipment having experienced a radio event, and wherein fulfilment of the criterion is an indication that the radio event is upcoming for the first user equipment (110),
*receiving (205, 302)* a current measurement of the at least one radio quality of the first user equipment (110), and
when the criterion is fulfilled, *triggering* (207, 304) positioning of the first user equipment (110).

2. The method according to claim 1, wherein the first radio network node (105, 110, 120) is a network manager (120), a domain manager (120), a first base station (105), or the first user equipment (110).

3. The method according to any one of claims 1 and 2, wherein the triggering (207, 304) comprises sending (208) a triggering message to at least one second radio network node (105, 110, 115), which triggering message triggers positioning of the first user equipment (110) in the second radio network node (105, 110, 115).

4. The method according to claim 3, wherein the second radio network node (105, 110, 115) is a positioning server, a first base station (105) or the first user equipment (110).

5. The method according to any one of the preceding claims, wherein the criterion is obtained from a data base comprising the historical measurements.

6. The method according to any one of the preceding claims, further comprising estimating (303) the speed at which the radio event is upcoming for the first user equipment (110), and wherein the triggering (207, 304) is adjusted according to the speed.

7. The method according to any one of the preceding claims, wherein the criterion relates to one or more time sequences of one or more radio qualities.

8. A first radio network node (105, 110, 120) for handling positioning of a first user equipment (110), which first radio network node (105, 110, 120) and which first user equipment (110) are comprised for use in a radio communication system (100), the first radio network node (105, 110, 120) comprising:
a *defining unit (400)* configured to define a criterion relating to at least one measurable radio quality of the first user equipment (110), which criterion is based on historical measurements of the at least one radio quality of at least one second user equipment having experienced a radio event, and wherein fulfilment of the criterion is an indication that the radio event is upcoming for the first user equipment (110),
a *receiver (410)* configured to receive a current measurement of the at least one radio quality of the first user equipment (110), and
a *triggering unit (420)* configured to, when the criterion is fulfilled, trigger positioning of the first user equipment (110).

9. The first radio network node (105, 110, 120) according to claim 8, wherein the first radio network node (105, 110, 120) is a network manager (120), a domain manager (120), a first base station (105), or the first user equipment (110).

10. The first radio network node (105, 110, 120) according to claim 8 or 9, further comprising a transmitter (430) configured to signal a triggering message to at least one second radio network node (105, 110, 115), which triggering message triggers positioning of the first user equipment (110) in the second radio network node (105, 110, 115).

11. The first radio network node (105, 110, 120) according to any one of claims 8-10, further comprising an estimation unit (440), configured to estimate the speed at which the radio event is upcoming for the first user equipment (110), and wherein the triggering unit (420) is further configured to adjust the triggering according to the speed.

12. The first radio network node (105, 110, 120) according to any one of claims 8-11, wherein the defining unit (400) is further configured to define a criterion which relates to one or more time sequences of one or more radio qualities.

## Patentansprüche

1. Verfahren in einem ersten Funknetzknoten (105, 110, 120) zur Positionierungshandhabung eines ersten Benutzergeräts (110), wobei der erste Funknetzknoten (105, 110, 120) und wobei das erste Benutzergerät (110) in einem Funkkommunikationssystem (100) enthalten sind, wobei das Verfahren Folgendes umfasst:
*Definieren (204, 301)* eines Kriteriums, das sich auf wenigstens eine messbare Funkqualität des ersten Benutzergeräts (110) bezieht, wobei das Kriterium auf historischen Messungen der wenigstens einen Funkqualität von wenigstens einem zweiten Benutzergerät basiert, bei dem ein Funkereignis aufgetreten ist und wobei die Erfüllung des Kriteriums ein Anzeichen dafür ist, dass das Funkereignis für das erste Benutzergerät (110) bevorsteht,
*Empfangen (205, 302)* einer aktuellen Messung der wenigstens einen Funkqualität des ersten Benutzergeräts (110), und
wenn das Kriterium erfüllt ist, *Auslösen* (207, 304) einer Positionierung des ersten Benutzergeräts (110).

2. Verfahren nach Anspruch 1, wobei es sich bei dem ersten Funknetzknoten (105, 110, 120) um einen Netzmanager (120), einen Domain-Manager (120), eine erste Basisstation (105) oder das erste Benutzergerät (110) handelt.

3. Verfahren nach einem der Ansprüche 1 und 2 , wobei das Auslösen (207, 304) das Senden (208) einer Auslösenachricht an wenigstens einen zweiten Funknetzknoten (105, 110, 115) umfasst, wobei die Auslösenachricht die Positionierung des ersten Benutzergeräts (110) im zweiten Funknetzknoten (105, 110, 115) auslöst.

4. Verfahren nach Anspruch 3, wobei es sich bei dem zweiten Funknetzknoten (105, 110, 115) um einen Positionierungsserver, eine erste Basisstation (105) oder das erste Benutzergerät (110) handelt.

5. Verfahren nach einem der vorhergehenden Ansprüche, wobei das Kriterium aus einer Datenbank erhalten wird, die die historischen Messungen umfasst.

6. Verfahren nach einem der vorhergehenden Ansprüche, ferner umfassend das Schätzen (303) der Geschwindigkeit, mit der das Funkereignis für das erste Benutzergerät (110) bevorsteht und wobei das Auslösen (207, 304) gemäß der Geschwindigkeit angepasst wird.

7. Verfahren nach einem der vorhergehenden Ansprüche, wobei sich das Kriterium auf eine oder mehrere Zeitsequenzen einer oder mehrerer Funkqualitäten bezieht.

8. Ein erster Funknetzknoten (105, 110, 120) zur Positionierungshandhabung eines ersten Benutzergeräts (110), wobei der erste Funknetzknoten (105, 110, 120) und wobei das erste Benutzergerät (110) zur Verwendung in einem Funkkommunikationssystem (100) enthalten sind, wobei der erste Funknetzknoten (105, 110, 120) Folgendes umfasst:
eine *Definitionseinheit (400),* die ausgelegt ist, ein Kriterium zu definieren, das sich auf wenigstens eine messbare Funkqualität des ersten Benutzergeräts (110) bezieht, wobei das Kriterium auf historischen Messungen der wenigstens einen Funkqualität von wenigstens einem zweiten Benutzergerät basiert, bei dem ein Funkereignis aufgetreten ist, und wobei die Erfüllung des Kriteriums ein Anzeichen dafür ist, dass das Funkereignis für das erste Benutzergerät (110) bevorsteht,
einen *Empfänger (410),* der ausgelegt ist, eine aktuelle Messung der wenigstens einen Funkqualität des ersten Benutzergeräts (110) zu empfangen, und
eine *Auslöseeinheit (420),* die ausgelegt ist, wenn das Kriterium erfüllt ist, eine Positionierung des ersten Benutzergeräts (110) auszulösen.

9. Der erste Funknetzknoten (105, 110, 120) gemäß Anspruch 8, wobei es sich bei dem ersten Funknetzknoten (105, 110, 120) um einen Netzmanager (120), einen Domain-Manager (120), eine erste Basisstation (105) oder das erste Benutzergerät (110) handelt.

10. Der erste Funknetzknoten (105, 110, 120) gemäß Anspruch 8 oder 9, ferner umfassend einen Sender (430), der ausgelegt ist, eine Auslösenachricht an wenigstens einen zweiten Funknetzknoten (105, 110, 115) zu signalisieren, wobei die Auslösenachricht die Positionierung des ersten Benutzergeräts (110) im zweiten Funknetzknoten (105, 110, 115) auslöst.

11. Der erste Funknetzknoten (105, 110, 120) gemäß einem der Ansprüche 8-10, ferner umfassend eine Schätzungseinheit (440), die ausgelegt ist, die Geschwindigkeit, mit der das Funkereignis für das erste Benutzergerät (110) bevorsteht, zu schätzen, und wobei die Auslöseeinheit (420) ferner ausgelegt ist, das Auslösen gemäß der Geschwindigkeit anzupassen.

12. Der erste Funknetzknoten (105, 110, 120) gemäß einem der Ansprüche 8-11, wobei die Definitionseinheit (400) ferner ausgelegt ist, ein Kriterium zu definieren, das sich auf eine oder mehrere Zeitsequenzen einer oder mehrerer Funkqualitäten bezieht.

## Revendications

1. Procédé dans un premier noeud de réseau radio (105, 110, 120) pour gérer le positionnement d'un premier équipement utilisateur (110), lequel premier noeud de réseau radio (105, 110, 120) et lequel premier équipement utilisateur (110) sont compris dans un système de communication radio (100), le procédé comprenant :
la définition (204, 301) d'un critère concernant au moins une qualité radio mesurable du premier équipement utilisateur (110), lequel critère est basé sur des mesures historiques de l'au moins une qualité radio d'au moins un deuxième équipement utilisateur ayant expérimenté un événement radio, et dans lequel une satisfaction du critère est une indication que l'événement radio est à venir pour le premier équipement utilisateur (110),
la réception (205, 302) d'une mesure actuelle de l'au moins une qualité radio du premier équipement utilisateur (110), et
quand le critère est satisfait, le déclenchement (207, 304) du positionnement du premier équipement utilisateur (110).

2. Procédé selon la revendication 1, dans lequel le premier noeud de réseau radio (105, 110, 120) est un gestionnaire de réseau (120), un gestionnaire de domaine (120), une première station de base (105) ou le premier équipement utilisateur (110) .

3. Procédé selon l'une quelconque des revendications 1 et 2, dans lequel le déclenchement (207, 304) comprend l'envoi (208) d'un message de déclenchement à au moins un deuxième noeud de réseau radio (105, 110, 115), lequel message de déclenchement déclenche le positionnement du premier équipement utilisateur (110) dans le deuxième noeud de réseau radio (105, 110, 115).

4. Procédé selon la revendication 3, dans lequel le deuxième noeud de réseau radio (105, 110, 115) est un serveur de positionnement, une première station de base (105) ou le premier équipement utilisateur (110).

5. Procédé selon l'une quelconque des revendications précédentes, dans lequel le critère est obtenu à partir d'une base de données comprenant les mesures historiques.

6. Procédé selon l'une quelconque des revendications précédentes, comprenant en outre l'estimation (303) de la vitesse à laquelle l'événement radio est à venir pour le premier équipement utilisateur (110) et dans lequel le déclenchement (207, 304) est réglé en fonction de la vitesse.

7. Procédé selon l'une quelconque des revendications précédentes, dans lequel le critère concerne une ou plusieurs séquences temporelles d'une ou plusieurs qualités radio.

8. Premier noeud de réseau radio (105, 110, 120) pour gérer le positionnement d'un premier équipement utilisateur (110), lequel premier noeud de réseau radio (105, 110, 120) et lequel premier équipement utilisateur (110) sont compris pour l'utilisation dans un système de communication radio (100), le premier noeud de réseau radio (105, 110, 120) comprenant :
une unité de définition (400) configurée pour définir un critère concernant au moins une qualité radio mesurable du premier équipement utilisateur (110), lequel critère est basé sur des mesures historiques de l'au moins une qualité radio d'au moins un deuxième équipement utilisateur ayant expérimenté un événement radio, et dans lequel une satisfaction du critère est une indication que l'événement radio est à venir pour le premier équipement utilisateur (110),
un récepteur (410) configuré pour recevoir une mesure actuelle de l'au moins une qualité radio du premier équipement utilisateur (110), et
une unité de déclenchement (420) configurée pour, quand le critère est satisfait, déclencher le positionnement du premier équipement utilisateur (110).

9. Premier noeud de réseau radio (105, 110, 120) selon la revendication 8, dans lequel le premier noeud de réseau radio (105, 110, 120) est un gestionnaire de réseau (120), un gestionnaire de domaine (120), une première station de base (105) ou le premier équipement utilisateur (110).

10. Premier noeud de réseau radio (105, 110, 120) selon la revendication 8 ou 9, comprenant en outre un émetteur (430) configuré pour signaler un message de déclenchement à au moins un deuxième noeud de réseau radio (105, 110, 115), lequel message de déclenchement déclenche le positionnement du premier équipement utilisateur (110) dans le deuxième noeud de réseau radio (105, 110, 115).

11. Premier noeud de réseau radio (105, 110, 120) selon l'une quelconque des revendications 8 à 10, comprenant en outre une unité d'estimation (440) configurée pour estimer la vitesse à laquelle l'événement radio est à venir pour le premier équipement utilisateur (110) et dans lequel l'unité de déclenchement (420) est configurée en outre pour régler le déclenchement en fonction de la vitesse.

12. Premier noeud de réseau radio (105, 110, 120) selon l'une quelconque des revendications 8 à 11, dans lequel l'unité de définition (400) est configurée en outre pour définir un critère qui concerne une ou plusieurs séquences temporelles d'une ou plusieurs qualités radio.
